# EUROPÄISCHE PATENTANMELDUNG

(11) **EP 2 790 009 A1**
(43) Veröffentlichungstag der Anmeldung: **15.10.2014**
(21) Anmeldenummer: 13163245.7
(22) Anmeldetag: 11.04.2013
(51) Int. Cl.: G01N 21/64, B82Y 15/00, G01N 21/78

(54) **Erfindung betreffend Gassensoren**

(71) Anmelder: Justus-Liebig-Universität Gießen, 35390 Gießen (DE)
(72) Erfinder: Becker, Pascal, 35415 Pohlheim (DE); Eickhoff, Martin, 35398 Giessen (DE); Helwig, Andreas, 80469 München (DE); Müller, Gerhard, 85567 Grafing (DE); Paul, Sumit, 81677 München (DE); Teubert, Jörg, 35394 Giessen Giessen (DE)
(74) Vertreter: Stumpf, Peter

(57) **Zusammenfassung**

Die vorliegende Erfindung betrifft Gassensoren und insbesondere ein Gassensorsystem umfassend mehrere Gassensorelemente, mit der Möglichkeit zur simultanen Detektion von mehreren verschiedenen Gasen.

Die neuartigen Gassensoren, in einem Gassensorsystem zusammengefasst, ermöglichen die simultanen Detektion unterschiedlicher Gase unter Einhaltung der Medientrennung zwischen Detektions- und Auswerteeinheit und Sensorchip zum Einsatz in chemisch aggressiven oder explosiven Gasen bzw. Gasmischungen. Als Sensorelemente kommen insbesondere Photolumimeszenz (PL)-aussendende Halbleiter-Nanostrukturen zum Einsatz.

## Beschreibung

Die vorliegende Erfindung betrifft Gassensoren und insbesondere einen Gassensor umfassend mehrere Gassensorelemente, mit der Möglichkeit zur simultanen Detektion von mehreren verschiedenen Gasen. Die erfindungsgemäßen Sensorelemente zeigen das Vorhandensein von verschiedenen Gasen durch verschiedene Photolumineszenz-Reaktionen an und bestehen insbesondere aus homogenen oder heterogenen Halbleiter-Nano- oder/und Mesostrukturen.

Insbesondere können Gase aus der Gruppe der oxidierenden Gase von den Gasen getrennt detektiert werden, welche zur Gruppe der reduzierenden Gase gehören.

Die neuartigen Gassensoren, ermöglichen die simultane Detektion unterschiedlicher Gase unter Einhaltung der Medientrennung zwischen Detektions- und Auswerteeinheit und Träger der Sensorelemente zum Einsatz in chemisch aggressiven oder explosiven Gasen bzw. Gasmischungen. Die neuartigen Gassensoren vermeiden sogenannte spektrale Absorptionsmessungen (wie z.B. bei optischen Gassensoren basierend auf Infrarotabsorption), erlauben die Etablierung einer stromlosen Messmethode (d.h. keine elektrischen Ströme im Messvolumen und keine elektrischen Durchführungen in das /aus dem Messvolumen), und erlauben die Reduzierung der Detektionstemperatur zur Vermeidung lokaler Zündfunken unter Beibehaltung kurzer Ansprech- und Erholungszeiten, sowie eine Erhöhung der Empfindlichkeit gegen verschiedene Zielgase und dies auch in Gasmischungen.

### Stand der Technik

Aus dem Stand der Technik sind eine Vielzahl von Sensoren bekannt: Konduktometrische Metalloxid-Gassensoren beruhen auf einer Verbrennung von Gasen auf der Sensoroberfläche (nicht stromlos, hohe Sensortemperaturen), IR Gassensoren erfordern komplexeren optischen Aufbau, da die Lichtabsorption im Bezug auf einen Referenzstrahl gemessen werden muss. Die Detektion mehrerer Gase erfordert die Analyse mehrerer Bereiche eines Absorptionsspektrums. Kapazitive Gassensoren auf MOSFET-Basis müssen ebenfalls geheizt werden und erfordern eine elektrische Auslesung.

Die Detektion unterschiedlicher Gase war entweder nur unter Verwendung von Gassensor Arrays unter Verwendung unterschiedlicher gassensitiver Schichten (hier steigt die Anzahl der elektrischen Durchführungen mit der Anzahl der zu detektierenden Gase) oder durch spektrale Absorptionssensoren mit Frequenzauflösung möglich, d.h. der systemische Aufwand und der Montageaufwand (Durchführungen etc.) zur Detektion zweier Gase ist erheblich größer als zur Detektion eines Gases.

Ebenso weisen alle im Stand der Technik bekannten Sensoren, welche nicht bei sehr hohen Temperaturen (z.B. nicht oberhalb von 500°C betrieben werden) den Nachteil von relativ langen Ansprechzeiten und Erholungsdauern auf. D.h. bei Änderung der Konzentration eines Gases oder Gas-Typs erfolgt die Detektion erst mit einigen Minuten Verzögerung (Ansprechzeit/Response time) und nach der Detektion durch Änderung des entsprechenden Lumineszenzverhaltens dauert es einige Minuten bis eine neue Konzentrationsänderung überhaupt wieder detektierbar ist (Erholungsdauer/Recovery time).

Nachteilig ist auch, dass die bekannten Sensoren meist einen eingeschränkten Sensitivitätsbereich aufweisen, der meist nur im Bereich von einigen % liegt und keinesfalls etwa von ppb zu ppm oder gar vom ppb- über den ppm- bis in den %-Bereich reicht.

### Aufgabe

Aufgabe der vorliegenden Erfindung ist es, die vorgenannten Nachteile des Standes der Technik mittels der Bereitstellung der erfindungsgemäßen Gassensoren und der erfindungsgemäßen Sensorelemente (ein Nanodraht mit verschiedenen "Passivierungsdicken") zu reduzieren, zu beseitigen oder zu umgehen.

### Lösung der Aufgabe

Diese Aufgabe wird erfindungsgemäß gelöst durch den Gegenstand gemäß Anspruch 1 und 10 (Sensorelement) sowie durch das Betriebs-/Detektions-/Auswerte-Verfahren gemäß des Anspruchs 12. Überraschenderweise wurde gefunden, dass die Detektion von einzelnen, verschiedenen Gasen, auch in Gasgemischen simultan durch die Detektion der Änderung der Photolumineszenzintensität (PL-Intensität) von Halbleiter-Nanostrukturen, z.B. aus III-V-Halbleitern in binärer, ternärer oder quartärnerer Form (mit oder ohne Dotierung) , aber insbesondere aus GaN, InGaN Nanodrähten (im Folgenden auch NW = Nanowire) oder InGaN/GaN Quantenpunkten oder Nanodisks (oder im Folgenden auch Nanodots oder Nanodisks (ND) oder Nanoscheiben genannt) oder Kombinationen von diesen Strukturen, insbesondere in Form von sogenannten Nanodraht-Heterostrukturen, möglich ist. Photolumineszenz meint hier, wie auch allgemein bekannt definiert, die Aussendung von Licht aufgrund der Anregung durch Photonen, wobei Fluoreszenz und Phosphoreszenz nur die Zeitdauer der Photolumineszenz unterscheidet.

Es wurde gefunden, dass durch die Bildung von sehr kleinen, etwa in Form von Nanodots oder -discs, vorzugsweise aber schmalen und gestreckten Nanostrukturen, etwa in der Form von Nanodrähten ausreichend Licht zur Detektion der Photolumineszenzänderung bei Beaufschlagung mit Gasen oder Gasgemischen emittiert wird.

Es wurde ebenso gefunden, dass zur Detektion im sichtbaren Wellenlängenbereich und Anregung mit kommerziell verfügbaren Lichtquellen (z.B. Laserdiode bei 405 nm, LED bei 365 nm) In-haltige Gruppe III-Nitrid Nanostrukturen vorzugsweise vorzusehen sind.

Weiterhin wurde gefunden, dass die Wellenlänge, bei welcher derartige Nanostrukturen nach Anregung Photolumineszenzlicht aussenden, stark durch die Geometrie und Legierungszusammensetzung, bei Quantenpunkten auch durch die Kristallorientierung der Sensorelemente bestimmt wird.

Das Detektionsprinzip ist die Änderung der Intensität des Photolumineszenzlichtes unbehandelter oder funktionalisierter Nanostrukturen bei Änderung der umgebenden Gaszusammensetzung.

Für Nanodrähte wurde beobachtet: eine Abnahme der PL-Intensität unbehandelter Oberflächen bei Kontakt mit oxidierenden, eine Zunahme der Intensität von Nanostrukturen, die mit katalytischen Metallen (z.B. Pt oder Pd) beschichtet wurden bei Kontakt mit reduzierenden Gasen, wie z.B. H2 und allen Hydrocarbonen, wie C2H2, C2H4, C3H6, CH4 etc.. Für H2 konnte damit eine Sensitivität von bis hinunter zu 100 ppb im Bereich von 60 bis 100°C und insbesondre bei rund 80° erzielt werden.

Erfindungsgemäß ist es nun gelungen auf einem Substrat mehrere nanostrukturierte Sensorelemente mit unterschiedlichen Photolumineszenz-aktiven (PL-aktiven) Bereichen und damit unterschiedlichen Sensoreigenschaften aufzubringen. Diese unterschiedlichen PL-aktiven Bereiche emittieren Licht mit unterschiedlicher Wellenlänge. Zur Ausbildung der unterschiedlich PL-aktiven Bereiche dienen z.B. Bereiche mit unterschiedlichen Abmessungen, wie langgestreckte Bereiche von III-V-Halbleitermaterial, in Form von NWs, in Kombination mit sehr flachen Bereichen, in Form von Nano-Disks- oder Dots. Somit kann durch Detektion der Intensitätsänderung des PL-Lichtes bei einer bestimmten Wellenlänge (realisiert durch entsprechende Filter) eine Selektivität bzgl. eines Gases oder einer Gruppe von Gasen erreicht werden, bzw. die Konzantrationsänderungen unterschiedlicher Gase können simultan gemessen werden, ohne dass ein Mehraufwand bzgl. der Sensormontage (z.B. Anzahl der elektrischen Durchführungen) entsteht.

In dem bevorzugt aus den neuartigen Sensorelementen hergestellten Gassensorsystem werden dabei alle Sensorelemente -vorzugsweise- mit der gleichen Wellenlänge oder mit dem gleichen, engen Bereich von Wellenlängen, angeregt. Dies vermeidet den Einsatz von mehreren Lichtquellen.

Bei Integration von Nanostrukturen mit unterschiedlicher Emissionswellenlänge und unterschiedlicher Gassensitvität (durch Deposition unterschiedlicher gassensitiver oder katalytischer Funktionalisierungsschichten) kann so eine Detektionsselektivität auf der Auslesungsseite durch unterschiedliche Detektionswellenlängen erreicht werden.

Da es sich um eine rein optische Auslesung handelt stellt die Farbcodierung die praktikabelste Form des "Multiplexens" dar. In der Umsetzung bedeutet dies, dass entweder unterschiedliche schmalbandige Fotodetektoren oder Filter das "Decodieren" ermöglichen. Für rein optisch auslesbare Sensoren bedeutet dies die einzige Möglichkeit, mit nur einer Anregungslichtquelle mehrere Sensoren differenziert auszulesen. Dies ist ein weiterer, signifikanter Unterschied und Vorteil z.B. zu Gasdetektion durch Absorptionsmessungen.

### [Ausführungsbeispiele]

Eine Verdeutlichung der ersten Ausführungsbeispiele zeigen die folgenden Figuren. Weitere Ausführungsbeispiele werden im Anschluss daran -ohne graphische Abbildung- offenbart. Es zeigen:
Fig. 1: Eine dreidimensionale Darstellung eines Sensorelements mit 2 unterschiedlichen PL-aktiven Bereichen in Form eines Nanodrahtes auf einem Ausschnitt eines Trägers für Sensorelemente (Substratausschnitt);
Fig. 2: Eine dreidimensionale Darstellung eines Sensorelementes mit mehreren PL-aktiven Bereichen stark unterschiedlicher Abmessungen ((Nano-Draht und Nano-Disks) auf einem Substratausschnitt;
Fig. 3: Eine dreidimensionale Darstellung eines Sensorelementes nach

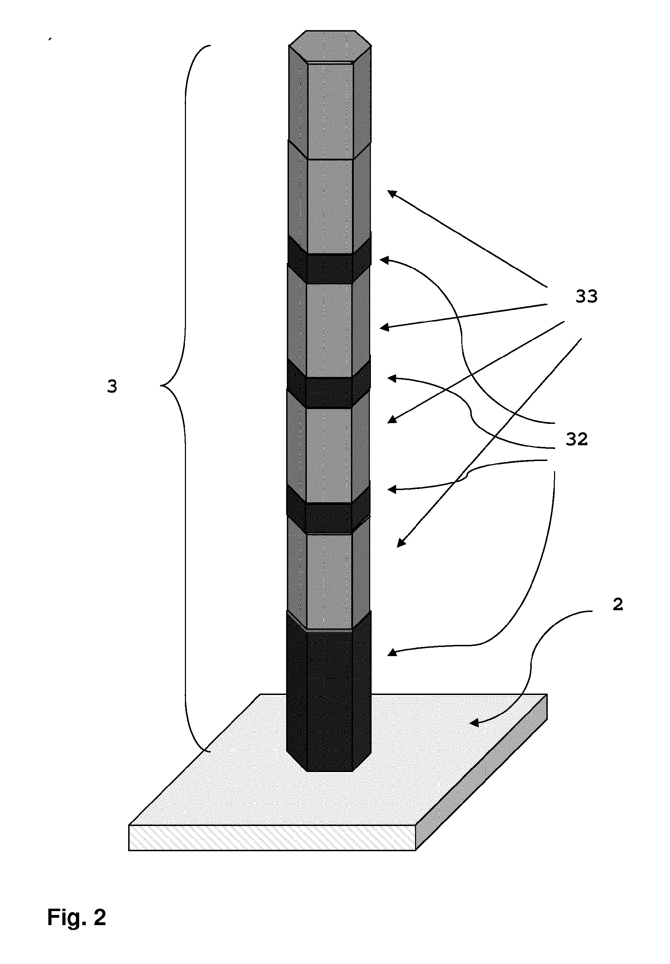

Fig.2, jedoch mit sensitivitätsdämpfenden Bereichen (34);

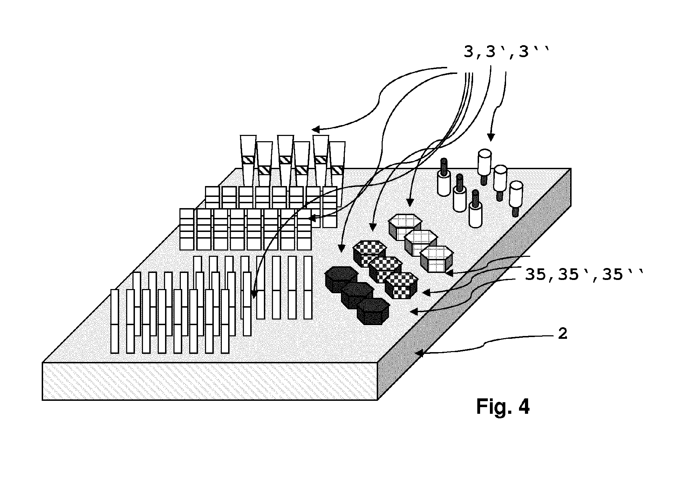

Fig. 4: Einen Träger für Sensorelemente mit einer Vielzahl von unterschiedlichen Sensorelementen in Form von heterogenen Nanodrähten und Nanodisks, in Form von konisch verlaufenden Nanodrähten mit und ohne Nanodisks, sowie mit unterschiedlichen Kristallstrukturen, sowie mit organischen Funktionalisierungsschichten (35, 35'), welche auf dem gleichen Substrat, oder -nicht dargestellt- auf einem eigenen Substrat oder auf dem ersten Substrat oder neben den anorganischen Sensorelementen angeordnet sind.

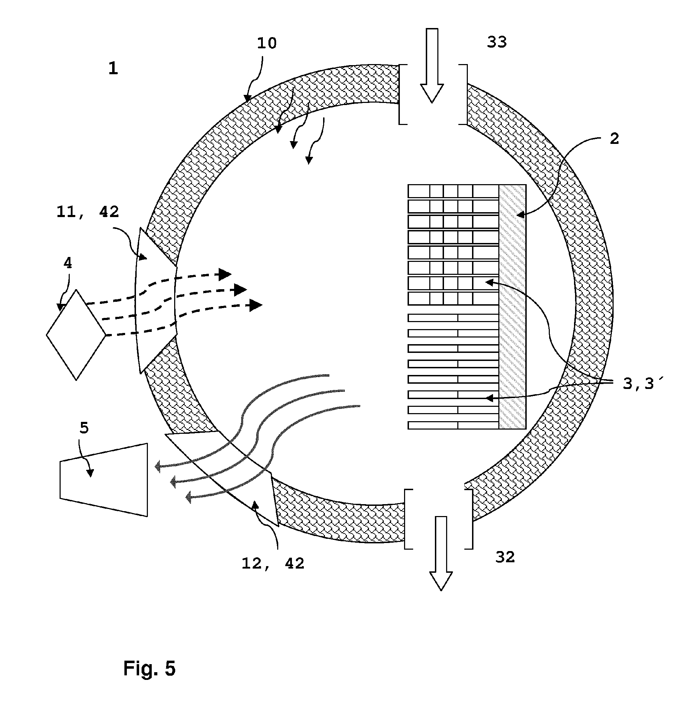

Fig. 5: Draufsicht auf einen Schnitt durch ein Gassensorsystem mit zwei verschiedenen Bereichen von Sensorelementen in Form von Nanodrähten mit oder ohne Einbau von Nanodisks, oder -dots.

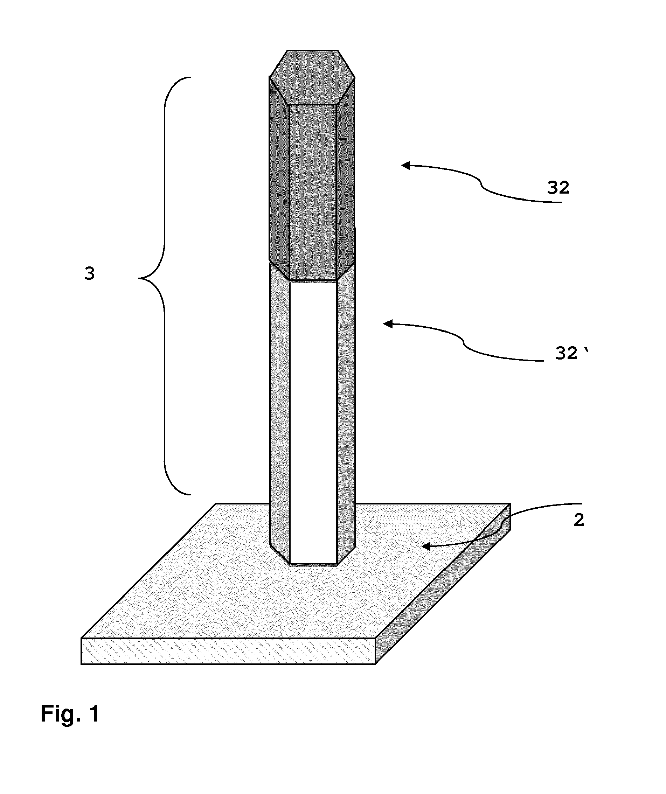

Fig. 1 - Verkürzung der Reaktionszeit und der Erholungsdauer bei/nach Gasbeaufschlagung:
In einem ersten Ausführungsbeispiel weist das Sensorsystem ein Substrat (2) aus Si (111) mit selbst-assemblierten Nanodrähten in Form einer GaN Basis (32') und einer InGaN-Spitze (32) auf. Diese wurden durch ein Plasma unterstütztes Molecular Beam Epitaxy (MBE)-Verfahren gemäß dem Selbstassemblierungsprozess von F. Furtmayr et al., Journal of Applied Physics, 104 (3) (2008) 34309 hergestellt und weisen einen Durchmesser zwischen 25nm und 50nm und an der Spitze von rund 90 nm auf.

InGaN wurde in Form von In_{0,34}Ga_{0,66}N gewählt, um eine Emission im sichtbaren Bereich bei rund 2,25 eV, d.h. 550nm bei Raumtemperatur zu erhalten.

Die Anregung erfolgte mit Licht im UV-Bereich bei Energien oberhalb von 2,25 eV, was zur Anregung der Lichtemission der InGaN und GaN-Bereiche (also beider PL-aktiver Bereiche) führte. Mit diesen Sensorelementen ist auch bei Raumtemperatur noch eine ausreichende Änderung der Photolumineszenzemission bei Beaufschlagung mit oxidierenden und/oder reduzierenden Gasen detektierbar. Um H2 detektierbar (in Luft) zu machen, wurden die Nanodrähte funktionalisiert und zwar durch Deposition von katalytischem Pt durch physikalische Dampfabscheidung mittels eines electron beam evaporation Systems. Damit konnte ein ca. ca. 5 nm dicker Pt-Film (stellenweise) bevorzugt auf den oberen Bereichen der Nanodrahtwände erzeugt werden.

Mit diesen Sensorelementen kann das Gas H2 bei Raumtemperatur mit bis hinunter zu einer Konzentration von 10 ppm und bei 80° C Temperatur der Sensorelemente bis hinunter zu 200 ppb detektiert werden. Ebenso können die Hydrocarbone C2H2, C2H4, C3H6 und CH4 -bei 80°C- bis hinunter zu Konzentrationen von 5, 20, 80 bzw. 150 ppm detektiert werden.

Erfindungsgemäß weist das Gassensorsystem eine Vielzahl von diesen ersten Sensorelementen auf, wobei das Verhältnis von Höhe der Drähte zu Abstand der Außenwände ("Aspektverhältnis") von 2 Drähten im Bereich von 10, bevorzugt unter 8 und ganz bevorzugt von unter 4 und ganz besonders bevorzugt von unter 2 liegt. Die Reduzierung des Aspektverhältnisses durch eine Reduzierung der Höhe oder Vergrößerung des Abstandes benachbarter Sensorelemente führt zu einer Reduzierung der Antwort- und Erholzeiten des Systems.

Fig. 2 - Verringerung der Temperatursensitivität der PL-Emissionsstärke In einem weiteren Ausführungsbeispiel wird die Temperatursensitivität der PL-Emissionsstärke verringert.

Dazu ist ein weiteres Sensorelement vorgesehen, welches ebenfalls in Form eines GaN-Nanodrahtes, jedoch mit zusätzlichen GaN oder InGaN-Nanodisks, getrennt durch sogenannte Barriereschichten in Form von AlGaN oder/und mit einer Kappe aus AlGaN oder GaN ausgeführt ist. Diese Nanodrähte wurden durch PAMBE (wie im ersten Ausführungsbeispiel) durch Selbstassemblierung als (0001) GaN NW mit einem Durchmesser von rund 25-50nm ausgeführt. Es wurden mehrere ca. 1-4 nm hohe GaN oder InGaN Nanodisks (NDs), getrennt von jeweils 5 nm -10 nm hohen Al_{0,28}Ga_{0,72}N -Barrieren, beginnend mit einer solchen Barriereschicht, oberhalb der GaN-Basis vorgesehen.

Zur Detektion von H2 wurde eine Gruppe der Sensorelemente mit semitransparentem Pt beschichtet. Zur Detektion von 02 wurden die Sensorelemente ohne Beschichtung belassen.

Aufgrund der unterschiedlichen Abmessungen der GaN-NDs (1,7nm hoch) zu der wesentlichen längeren GaN-Basis im ausgeführten Beispiel wurde bei einer Anregung mit 325nm eine PL-Emission bei 3,64eV von den GaN-NDs und von 3,43eV von der GaN-Basis (bei 303K = ca. 30° C) detektiert. Bei 0,1 % H2 oder 0,1 % 02 und einer Temperatur der Sensorelemente von 150°C konnten relative Sensitivitätsänderungen von bis zu rund +15% in der PL-Intensität bei H2- und bis zu rund -30% in der PL-Intensität bei 02-Beaufschlagung auf die Pt-beschichteten bzw. die Pt-unbeschichteten Sensorelemente detektiert werden.

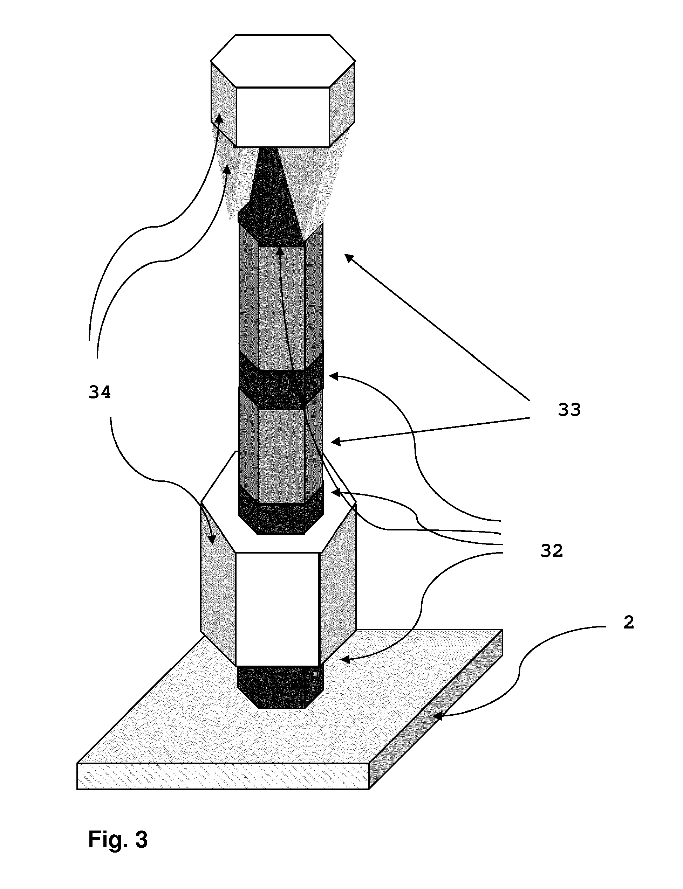

Fig. 3 - Messbereichserweiterung bzgl. der Gas-Konzentration

Zur Erweiterung des Messbereiches, d.h. um H2 mit einem Gassensor vom ppm-oder gar ppb- bis möglichst in den %-Bereich hinein zuverlässig detektieren zu können wird ein erfindungsgemäßes Sensorelement gemäß Fig. 3 vorgeschlagen. Zur Verschiebung des Sättigungsbereiches eines Sensorelementes, welches also z.B. im Bereich von 200 ppb schon sensitiv aber im Bereich von 200 ppm schon für H2 gesättigt ist, wird eine sensitivitätsdämpfende Schicht (34), welche in einigen Fällen quasi als Tunnelbarriere wirkt, um den durch Photolumineszenzaktiven Bereich eines Sensorelements herum anzubringen.

Fig. 3 zeigt dazu einen Teil des Sensorelementes gemäß Fig. 2, jedoch versehen mit einer sensitivitätsdämpfenden Schicht (34) im ersten gassensitiven Bereich.

Im Falle der Vorsehung von PL-aktiven Bereichen in Form von Quantumdots oder Nanodisks, z.B. aus GaN (InGaN), kann solch eine Schicht (34) durch eine Schicht z.B. aus AlGaN, insbesondere Al_{0,28}Ga_{0,72}N (GaN) so in der Sensitivität verschoben werden, dass eine Sättigung statt im Bereich von ppm (ohne Schicht 34) erst im Bereich von einigen % des zu messenden Gases erfolgt.

Als Material zur Sensitivitätsdämpfung aus den PL-aktiven Bereichen (32) ist das Barrierenmaterial (z.B. Al_{0,28}Ga_{0,72}N oder GaN) oder jedes weitere Material, welches eine Tunnelbarriere für photogenerierte Ladungsträger darstellt oder die Rekombination auf andere Weise, z.B. durch teilweise Absättigung von Oberflächenzuständen, geeignet. Die Dicke dieser Schicht (34) sollte - je nach Material - zwischen unter 1nm bis 10nm, bevorzugt 1 bis 3nm betragen. Unterscheiden sich in einer Ausführung nach Figur 3 die gassensitiven PL-aktiven Bereiche in ihrer Emissionswellenlänge (bei gleicher Gassensitivität), so kann auf diese Weise ein Gassensor realisiert werden, der in mehreren Konzentrationsbereichen messen kann. Dabei können diese unterschiedlichen Konzentrationsbereiche durch Analyse der PL-Intensitätsänderungen bei unterschiedlichen Wellenlängen "abgefragt" werden.

Fig. 4 - Ausweitung der parallel messbaren Gase/Erhöhung der Detektionsselektivität

Fig. 4 offenbart eine weitere Ausführungsform des Gassensors, in Form eines Substrates (2) mit einer Vielzahl von nanostrukturierten Sensorelementen, umfassend Nanodrähte aus III-V-Halbleitermaterial im Vordergrund links und einer Vielzahl von unterschiedlich strukturierten Halbleiter-Sensoren, in Hinblick auf Geometrieveränderungen (hinten links mit sich verjüngender Form und Nanodisks), sowie in Hinblick auf Kristallisationsrichtungen (hinten Mitte mit 2 verschiedenen Kristallisationsrichtungen und Geometrieänderungen), sowie in Hinblick auf Sensitivitätserweiterungen (hinten rechts).

Bei Integration von Nanostrukturen mit unterschiedlicher Emissionswellenlänge und unterschiedlicher Gassensitvität (durch Deposition unterschiedlicher gassensitiver oder katalytischer Funktionalisierungsschichten) kann so eine Detektionsselektivität auf der Auslesungsseite durch unterschiedliche Detektionswellenlängen erreicht werden.

In diesem Ausführungsbeispiel sind neben den oben (zu Fig. 1-3) genannten Sensorelementen noch Strukturen ausgeführt, die organischer Materialien mit umgebungsabhängiger Fluoreszenz ("organische Funktionalisierung") enthalten können, wie z.B. 1-hydroxypyrene-3,6,8-trisulfonate in SiO-Glas (C. Malins and B. D. MacCraith, Analyst 123, 2373 (1998)), das zur optischen CO₂-Detektion verwendnet werden kann oder Squarylium dye 1, Squarylium dye 2, and Rhodamine B in SiO-Glas zur NO2-Detektion (T. Ohyama et al., Sensors and Actuators B 59, 16 (1999)) und andere. Diese können auf dem gleichen Substrat oder einem anderen Substrat (nicht graphisch dargestellt), oder auch auf dem ersten Substrat aufgebracht (nicht graphisch dargestellt), angeordnet sein. Als geeignete anorganische und organische Funktionsschichten sind zu nennen:

Nanopartikel (z.B. CdS, CdSe, ZnSe oder Kombinationen daraus , z.B. core-shell Strukturen) sein, deren PL ebenfalls empfindlich auf die Zusammensetzung der Gasumgebung ist. Das können aber auch die bekannten, organischen Farbstoffe sein, die Chemofluoreszenz zeigen. Dazu gehören folgende Farbstoffklassen: Azofarbstoffe, Polyene, Polymethin-Farbstoffe, Cyaninfarbstoffe, Triphenylmethan-Farbstoffe, Carbonyl-Farbstoffe: Anthrachinone, Indigo, Porphyrine und Phthalocyanine oder die in S. W, Zhang, T. M. Swager J. Am. Chem. Soc., 2003, 125 (12), pp 3420-3421) genannten Farbstoffe.

Diese müssen nicht auf den NWs aufgebracht werden, sondern müssen nur durch die Anregungslichtquelle mit angeregt werden. Emittieren diese Licht bei einer anderen Wellenlänge als die NWS oder NDs (oder auch die Nanopartikel untereinander) oder als die organischen chemo-photolumineszenten (-fluoreszenten oder -phosphoreszenten) Substanzen (oder diese untereinander) so kann durch die simultane Detektion bei verschiedenen Wellenlängen eine Erhöhung der Funktionalität (durch entsprechende Auswertung der dann komplexeren Signale, die "farbcodiert" aufgenommen werden, eine Verbesserung der Funktionalität im Sinne von Erhöhung von Sensitivität und/oder Selektivität) erreicht werden. Es ist zu beachten, dass all diese "fluoreszierenden oder lumineszierenden Objekte oder Schichten", die ja (im oben beschriebenen Sinne) auch noch funktionalisiert sein können, eine unterschiedliche Oberflächenchemie und daher unterschiedliche Sensitivitätsmuster aufweisen. Als Funktionalisierungsschichten sind z.B. zu nennen: Katalytische Metalle (z.B. Pt, Pd, Ir, ), Metalloxide (Ru02. Ir2O3....), die z.B. durch Physikalische Gasphasenabscheidung (PVD) oder Atomic Layer Deposition (ALD) aber auch durch gepulste Laserdeposition (PLD) oder andere Verfahren auf die optisch aktiven Sensorstrukturen aufgebracht werden können. (z.B. A. Loyd Spetz et al. Sensors and Actuators B 70 67 (2000)).

### Nicht graphisch dargestellte Ausführungsbeispiele:

In einem weiteren Ausführungsbeispiel wurde gefunden, dass die Verwendung von transparenten Substraten zudem eine substratrückseitige Anregung und Auslesung ermöglicht, die für die Anwendung weitere Vorteile durch vereinfachte Eibautechnik bringt, denn hier kann das Substrat direkt als optisches Fenster verwendet werden. In Frage kommen z.B., je nach Anregungs- und Detektionswellenlänge Si(1 00), Si (111), SiC (3C, 4H, 6H,..), transparent: Diamant (ein-, poly- und nanokristallin), Saphir, GaN, AlGaN, ZnO. Ist das Substrat -in einem weiteren Ausführungsbeispiel- zusätzlich elektrisch leitfähig oder durch Aufbringen einer leitfähigen Schicht oder eine geeignete Behandlung leitfähig gemacht worden, so kann dies gleichzeitig als rückseitiger Kontakt verwendet werden und durch Einstellung eines geeigneten Potenzials die Detektionseigenschaften verbessert werden.

In einem weiteren -nicht graphisch dargestellten Ausführungsbeispiel- ist vorgesehen eine Stabilisierung des Sensorsignals (der Photolumineszenzaktivität der Nanostrukturen) zur Reduktion des Rauschens vorzusehen. Dazu werden die Nanostrukturen mit einer Funktionalisierungsschicht aus einem katalytischen Metall so in Verbindung gebracht (z.B. durch Aufbringen einer Siliziumoxid- oder Siliziumnitridschicht durch Sputtern, PECVD, ALD oder andere Prozesse), dass eine dielektrische Trennung vom rückseitigen Kontakt herbei geführt wird. Die Funktionalisierungsschicht aus dem katalytischen Metall wird dabei so angebracht, dass diese als Frontkontakt für die Nanostrukturen nutzbar ist. So kann durch Einstellung einer Potenzialdifferenz zwischen Rück- und Frontkontakt die PL-Intensität und die Sensitivität verbessert werden.

In einem besonders bevorzugten Ausführungsbeispiel ist vorgesehen, das alle PL-aktiven Bereiche so gewählt sind, dass diese mit dem Wellenlängenbereich einer einzigen Lichtquelle angeregt werden können.

In einem weiteren, besonders bevorzugten Ausführungsbeispiel ist vorgesehen, dass eine Vielzahl von Sensorelementen vorgesehen ist, welche in unterschiedlichen Höhen des zu detektierenden Gasvolumens angeordnet sind und unterschiedliche Dicken der sensitivitätsdämmenden Schicht (34) aufweisen. Mit einem derart ausgeführten Gassensor können räumlich hochaufgelöste Bestimmungen der Konzentration des zu untersuchenden Gases durchgeführt werden.

In einem ganz besonders bevorzugten Ausführungsbeispiel weist der Gassensor eine Vielzahl von Sensorelementen auf, wobei entlang jedes Sensorelements mehrerePLl-aktive Bereiche, insbesondere in Form von Nanodisks- oder -dots vorgesehen sind und diese Bereiche keine oder jeweils unterschiedlich dick ausgeführte sensitivitätsdämpfende Schichten (34) aufweisen. Mit einer Vielzahl solcher Sensorelemente lässt sich gleichzeitig ein sehr weiter Bereich von Konzentrationen bestimmen oder auf wenige Nanometer genau die lokale Konzentrationsänderung eines oder im Falle des Einbaus auch von PL-aktiven organischen Substanzen mit pl-Sensitivität auch für andere Gase und darauf ebenfalls angebrachter dämpfender Schichten (34) gleich mehrerer Gase bestimmen.

Im Folgenden werden die Herstellverfahren für kürzere Nanostrukturen (insbesondere Nanodrähte) und für die Erhöhung des Abstandes zwischen den Strukturen (insbesondere Nanodrähten) sowie für die Aufbringung von organischen Bereichen (insbesondere den oben genannten Farbstoffen) dargestellt.

Auch für die Herstellung kürzerer Nanodrähte oder zur Realisierung von Nanodraht-Ensembles mit geringerer Dichte wird das benannte PMBE-Verfahren verwendet.

Während eine Reduzierung der Nanodrahtlänge durch eine Reduzierung der Wachstumsdauer erreicht werden kann, lässt sich eine nachträgliche Reduzierung der Nanodrahtdichte z.B. durch mechanische Strukturierung erreichen. Hier werden in einem Ultraschallbad bei geeigneten Prozessparametern und geeigneter Nanodrahtgeometrie (Aspektverhältnis) Nanodrähte durch mechanische Schwingungsresonanz vom Substrat abgelöst. Eine Strukturierung wird dann dadurch erreicht, dass wenige (< 25) Nanodrähte durch eine Lackmaske in der Schwingung gedämpft werden und sich dadurch nicht vom Substrat lösen

Eine andere Methoden zur Kontrolle von Anzahl und Dichte während des Wachstums mit Hilfe des PMBE-Prozesses, z.B. durch selektive Nukleation mit Hilfe einer strukturierten Maskierungsschicht sind denkbar (K. Bertness et al., in Advanced Functional Materials 20, 2911 (2010): Verwendung von SiN als Maskierungsmaterial, T. Schumann et al. Nanotechnology 22, 095603 (2011): Si-oxid als Maskierungsmaterial).

Das Aufbringungsverfahren für die organischen Substanzen oder mit organischen Substanzen funktionalisierten anorganischen Materialien ist von den verwendeten spezifischen Materialien abhängig und kann der jeweiligen Literatur, z.B. den oben erwähnten Publikationen entnommen werden.

Im Folgenden werden das Kalibrier- und das Betriebsverfahren für den erfindungsgemäßen Gassensor (mit den beschriebenen Sensorelementen) beschrieben.

Die Kalibrierung des Sensorelements hängt von der zu erfüllenden Messaufgabe ab und entspricht der Aufnahme des Sensorsignals in einer wohldefinierten Gasumgebung (Nulllinie). Die Änderung der PL-Intensität bei Anwesenheit des zu detektierenden Gases wird ebenfalls als Kalibrierkurve hinterlegt. Die Auswertung der Messung erfolgt durch Vergleich des Messignals mit der Referenzkurve.

Um Einflüsse von Schwankungen der Umgebungsparameter (z.B. Temperatur, Luftfeuchtigkeit) zu erfassen und zu kompensieren kann eine Referenzsstruktur verwendet werden, die durch Aufbringen einer Passivierungsstruktur (z.B. dickes Barrierenmaterial oder eine andere optisch transparente Maskierungsschicht) für das Testgas unempfindlich gemacht wurde.

Die Auswertung zur parallelen Detektion von 2 oder mehr Gasen erfolgt durch Betrachtung der zeitliche Änderung der PL-Intensität der jeweils verschiedenen Wellenlängen und Vergleich mit der Kalibrierung, d.h. dem PL-Signal in einer wohldefinierten Gasatmosphäre.

**[Bezugszeichenliste]**

| | |
|---|---|
| 1 | Sensorsystem |
| 2 | Träger für Sensorelement (Substrat) |
| 3 | Sensorelement |
| 4 | Beleuchtungseinheit |
| 5 | Ausleseeinheit |
| 6 | Auswerteeinheit |
| | |
| 10 | Kammer für Gasdurchfluss |
| 11 | Lichtzugang zur Kammer |
| 12 | Lichtabgang aus Kammer |
| 13 | Temperiereinheit für Sensorelemente |
| 14 | Gaszugang |
| 15 | Gasabgang |
| | |
| 31 | Teilbereich eines Sensorelements |
| 32 | PL-aktiver Bereich eines Sensorelements |
| 33 | PL-inaktiver Bereich eines Sensorelements |
| 34 | Sensitivitätsdämpfende Schicht |
| 35 | PL-aktiver Bereich -in Form einer organischen Substanz- eines Elements |
| | |
| 41 | Lichtquelle |
| 42 | Lichtleitelement |
| | |
| 51 | Lichtsensor |
| 52 | Lichtleitelement |
| | |
| 61 | Recheneinheit |

## Patentansprüche

1. Gassensor, geeignet zur zeitgleichen Detektion von wenigstens zwei Gasarten unter Verwendung der Aktivitätsänderung von photolumineszenzaktiven (PL-aktiven) Sensorelementen, umfassend einen Bereich mit einer Vielzahl von Sensorelementen, welche aus Nanostrukturen bestehend aus GaN oder AlxGa(1-x)N/GaN oder/und GaN/lnxGa(1-x)N oder/und anderen, auch quarternären, III-V-Halbleiterkombinationen oder anderen PL-aktiven Hableiterkombinationen gefertigt sind, wobei der Gassensor (1) einen ersten Bereich aufweist, welcher eine Vielzahl von Nanostrukturen in Form von Nanodrähten (3) mit einer Dicke von unter 150nm, bevorzugt von unter 100nm und ganz besonders bevorzugt von unter 50nm oder bis unter 30nm aufweist und wobei
das Verhältnis von Höhe der Drähte zu Abstand der Außenwände von 2 Drähten im Bereich von 10, bevorzugt unter 8 und ganz bevorzugt von unter 4 und ganz besonders bevorzugt von unter 2 liegt.

2. Gassensor nach Anspruch 1, **dadurch gekennzeichnet, dass** die Höhe der Nanodrähte (3) mit einem Wert von unter 400nm, bevorzugt unter 300nm, besonders bevorzugt unter 250nm und ganz besonders bevorzugt von unter 200nm ausgeführt sind.

3. Gassensor nach Anspruch 1 oder 2, **dadurch gekennzeichnet, dass** die Nanodrähte (3) darin integriert mindestens je einen Abschnitt mit PL-aktiven Nanodisks oder -dots (32) oder/und einen zweiten Bereich mit einer Vielzahl von Nanodrähten mit darin integrierten jeweils mindestens einem Abschnitt aus einer pl-aktiven Nanodisk oder -dot (32), aufweisen, wobei die Nanodisks oder -dots (32) jeweils aus GaN oder/und InGaN, mit etwa gleicher Dicke, wie die Drähte und in einer Höhe von rund 1 bis 5nm gefertigt sind und die Sensorelemente PL-inaktive Bereiche (33) in Form von sogeannten Barriereschichten, z.B. aus AlxGa(1-x), insbesondere Al_{0,28}Ga_{0,72}N aufweisen.

4. Gassensor nach einem der voran gegangenen Ansprüche, dadurch -gekennzeichnet, dass ein Teilbereich des Sensors mindestens einen Bereich von Nanostrukturen in Form von Nanodrähten (3) oder einer der beiden Bereiche gemäß Anspruch 3 der Vielzahl von Sensorelementen (3), jeweils in einem PL-aktiven Bereich mit einem katalytischen oder andersartig gassensitiven Metall, z.B. Pt, mit einer Dicke von wenigen nm beschichtet ausgeführt ist, geeignet zur zeitgleichen Messung von reduktiven und oxidativen Gasen, wie z.B. H2 und 02.

5. Gassensor nach einem der voran gegangenen Ansprüche, dadurch -gekennzeichnet, dass ein Teilbereich des Sensors mindestens einen Bereich von Nanostrukturen oder ein weiterer Bereich von Nanostrukturen in Form von Nanodrähten (3) mit oder ohne Nanodisks- oder -dots (32), sogenannte sensitivitätsdämpfende Schichten (34), insbesondere in Form von AlxGa(1-x), insbesondere Al_{0,28}Ga_{0,72}N aufweist.

6. Gassensor nach einem der voran gegangenen Ansprüche, **dadurch gekennzeichnet, dass** der Gassensor (1) Sensorelemente (3) mit unterschiedlichen Dicken der dämpfenden Schicht (34) aufweist.

7. Gassensor nach einem der voran gegangenen Ansprüche, **dadurch gekennzeichnet, dass** der Gassensor (1) neben Sensorelementen (3) aus Halbleitermaterial zusätzlich Sensorelemente (3) aus PL-aktiven organischen Materialien zur Detektion von Gasen aufweist, z.B. 1-hydroxypyrene-3,6,8-trisulfonate in SiO-Glas, oder Squarylium dye 1, Squarylium dye 2, Rhodamine B in SiO-Glas zur NO2-Detektion oder Nanopartikel aus CdS, CdSe, ZnSe oder Kombinationen daraus , z.B. core-shell Strukturen oder die Vertreter und Mischungen der Farbstoffklassen Azofarbstoffe, Polyene, Polymethin-Farbstoffe, Cyaninfarbstoffe, Triphenylmethan-Farbstoffe, Carbonyl-Farbstoffe, wie Anthrachinone, Indigo, Porphyrine und Phthalocyanine oder die in S. W, Zhang, T. M. Swager J. Am. Chem. Soc., 2003, 125 (12), pp 3420-3421) genannten Farbstoffe.

8. Gassensor nach einem der voran gegangenen Ansprüche, dadurch -gekennzeichnet, dass als Träger (2) für die Sensorelemente ein transparenter Träger, geeignet zum Ein- oder/und Auskoppeln von Anregungs- und oder PL-Emissionen, vorgesehen ist.

9. Gassensor nach einem der voran gegangenen Ansprüche, dadurch -gekennzeichnet, dass das Substrat und eine an den Sensorelementen (3) angebrachte Frontkontaktierung, etwa in Form von katalytischem Metall, sowie ein Substrat aufweist, welche ausgeführt und zueinander in Verbindung gebracht werden, dass eine elektrische Potentialdifferenz zwischen Substrat und Frontkontaktierung einstellbar ist.

10. Sensorelement zur Detektion von Gasen durch Nutzung der Änderung der PL-Aktivitäten von mindestens zwei, bei unterschiedlichen Wellenlängen emittierenden, PL-aktiven Bereichen (32) des in Form einer länglichen Nanostruktur aus Halbleitermaterial, bevorzugt aus GaN oder AlxGa(1-x), vorgesehenen Elements, **dadurch gekennzeichnet, dass** das Element den mindestens zwei Bereichen zugeordnet, jeweils eine die Gassensitivität dämpfende Schicht (34) mit einer Dicke von 0 oder mehr, bevorzugt im Bereich von 1 bis 5 und besonders bevorzugt von 2-4 nm aufweist.

11. Sensorelement nach Anspruch 10, **dadurch gekennzeichnet, dass** einer der pl-aktiven Bereiche als Nanodisk aus GaN mit einer Dicke von 1 bis 5 bevorzugt von 1-3 nm ausgeführt ist und/oder einen pl-aktiven Bereich mit einer Beschichtung aus einem katalytischen Metall, insbesondere Pt, aufweist.

12. Verfahren zur zeitgleichen Detektion von mindestens 2 Gasen, **dadurch gekennzeichnet, dass** dazu lediglich die zeitliche Änderung der PL-Intensität von mindestens 2 verschiedenen Wellenlängen verwendet wird.

13. Verwendung eines Gassensors gemäß den Ansprüchen 1 bis 9, oder eines Sensorelements gemäß den Ansprüchen 10 bis 11 zur gleichzeitigen, ortsaufgelösten Bestimmung von Konzentrationsänderungen von mindestens 2 unterschiedlichen Gase im Genauigkeitsbereich von wenigen Nanometern.
